# EUROPÄISCHE PATENTSCHRIFT

(11) **EP 4 527 691 B1**
(45) Veröffentlichungstag und Bekanntmachung des Hinweises auf die Patenterteilung: **03.06.2026**
(21) Anmeldenummer: 24200460.4
(22) Anmeldetag: 16.09.2024
(51) Int. Cl.: B60Q 1/00, F21S 41/143, F21S 41/151, F21S 41/25, F21S 41/255, F21S 41/26, F21S 41/265, F21S 41/20, F21S 41/663, B60Q 1/10, B60Q 1/115, B60Q 1/12

(54) **BELEUCHTUNGSMODUL FÜR EIN FAHRZEUG**
LIGHTING MODULE FOR A VEHICLE
MODULE D'ÉCLAIRAGE POUR VÉHICULE

(30) Priorität: 19.09.2023 DE 102023125282
(43) Veröffentlichungstag der Anmeldung: 26.03.2025
(73) Patentinhaber: HELLA GmbH & Co. KGaA, 59552 Lippstadt (DE)
(72) Erfinder: Aichinger-Rosenberger, Michael, Spitz (AT); Kerschbaummayr, Raimund, Golling (AT); Losak, Tomas, Breclav (CZ); Pfingstl, Rainer, Stegersbach (AT)
(74) Vertreter: Behr-Wenning, Gregor

(56) Entgegenhaltungen:
- EP-A1- 3 163 154
- EP-A1- 3 282 182
- EP-A1- 4 202 289
- EP-A2- 1 526 328
- DE-A1- 102004 046 173
- DE-B3- 102020 135 001
- DE-B4- 102007 040 760
- US-A1- 2008 225 535
- US-A1- 2019 126 811
- US-A1- 2023 011 436
- US-A1- 2023 249 771
- US-B2- 7 131 758

## Beschreibung

Die Erfindung betrifft ein Beleuchtungsmodul mit den Merkmalen des unabhängigen Patentanspruchs 1, eine Beleuchtungsvorrichtung mit den Merkmalen des Patentanspruchs 8, ein Fahrzeug mit den Merkmalen des Patentanspruchs 9, ein Verfahren mit den Merkmalen des Patentanspruchs 10, ein Computerprogrammprodukt mit den Merkmalen des Patentanspruchs 11, ein computerlesbares Speichermedium mit den Merkmalen des Patentanspruchs 12 sowie ein Datenträgersignal mit den Merkmalen des Patentanspruchs 13.

Fahrzeuge, insbesondere Autos, LKW und/oder Motorräder, verfügen üblicherweise über wenigstens eine Beleuchtungsvorrichtung zur Ausleuchtung einer Umgebung des Fahrzeugs. Eine solche Beleuchtungsvorrichtung kann bevorzugt ein Frontscheinwerfer zur Beleuchtung einer vor dem Fahrzeug liegenden Umgebung sein. In Rede stehende Beleuchtungsvorrichtungen umfassen dabei eine oder mehrere Lichtquellen sowie ferner ein oder mehrere Optikelemente zur Erzeugung einer Lichtverteilung in der Fahrzeugumgebung, mit dem Ziel, die Fahrzeugumgebung für einen Fahrer möglichst optimal auszuleuchten sowie ferner störende Einflüsse wie bspw. eine Blendung des Gegenverkehrs zu vermeiden.

Beleuchtungsmodule sind aus der EP 1 526 328 A2 und DE 10 2007 040 760 B4 bekannt.

In Abhängigkeit einer aktuellen Fahrsituation eines Fahrzeugs können sich die Anforderungen an die durch eine Beleuchtungsvorrichtung erzeugte Lichtverteilung ändern. So kann es bspw. während einer Kurvenfahrt von Interesse sein, das Kurveninnere auszuleuchten, um einem Fahrer des Fahrzeugs eine bestmögliche Übersicht bieten zu können. Bei einer Verzögerung und/oder Beschleunigung des Fahrzeugs kann es ferner zu Nickbewegungen der Fahrzeugkarosserie bzw. der Beleuchtungsvorrichtung kommen, durch welche sich eine durch eine Beleuchtungsvorrichtung generierte Lichtverteilung aufgrund des veränderten Abstrahlwinkels relativ zur Umgebung ändern kann. Insbesondere bei einem Motorrad ergeben sich weitere Herausforderungen in Bezug auf die Neigung des Motorrads während einer Kurvenfahrt, welche die durch eine Beleuchtungsvorrichtung generierte Lichtverteilung aufgrund der mit der Neigung des Motorrads einhergehenden Lageänderung der Beleuchtungsvorrichtung beeinflusst.

Es ist daher Aufgabe der vorliegenden Erfindung, wenigstens einen der voranstehend beschriebenen Nachteile zumindest teilweise zu überwinden. Insbesondere ist es Aufgabe der Erfindung, ein Beleuchtungsmodul, eine Beleuchtungsvorrichtung, ein Fahrzeug sowie ein Verfahren zur Steuerung eines Beleuchtungsmoduls bereitzustellen, wodurch eine für einen Fahrer des Fahrzeugs optimierte Lichtverteilung in der Umgebung des Fahrzeugs erzeugbar ist, wobei vorzugsweise die Lichtverteilung auf möglichst einfache Weise an eine aktuelle Fahrsituation des Fahrzeugs anpassbar ist.

Die voranstehende Aufgabe wird gelöst durch ein Beleuchtungsmodul gemäß einem ersten Aspekt der vorliegenden Erfindung, durch eine Beleuchtungsvorrichtung gemäß einem zweiten Aspekt der vorliegenden Erfindung, durch ein Fahrzeug gemäß einem dritten Aspekt der vorliegenden Erfindung, durch ein Verfahren gemäß einem vierten Aspekt der vorliegenden Erfindung, durch ein Computerprogrammprodukt gemäß einem fünften Aspekt der vorliegenden Erfindung, durch ein computerlesbares Speichermedium gemäß einem sechsten Aspekt der vorliegenden Erfindung sowie durch ein Datenträgersignal gemäß einem siebten Aspekt der vorliegenden Erfindung. Weitere Merkmale und Details der Erfindung ergeben sich aus den Unteransprüchen, der Beschreibung und den Zeichnungen. Dabei gelten Merkmale und Details, die im Zusammenhang mit einem erfindungsgemäßen Beleuchtungsmodul beschrieben sind, selbstverständlich auch im Zusammenhang mit einer erfindungsgemäßen Beleuchtungsvorrichtung und/oder im Zusammenhang mit einem erfindungsgemäßen Fahrzeug und/oder im Zusammenhang mit einem erfindungsgemäßen Verfahren und/oder im Zusammenhang mit einem erfindungsgemäßen Computerprogrammprodukt und/oder im Zusammenhang mit einem erfindungsgemäßen computerlesbaren Speichermedium und/oder im Zusammenhang mit einem erfindungsgemäßen Datenträgersignal, sodass bezüglich der Offenbarung zu den einzelnen Erfindungsaspekten stets wechselseitig Bezug genommen wird bzw. werden kann.

Gemäß einem ersten Aspekt der Erfindung ist ein Beleuchtungsmodul zur Verwendung in einer Beleuchtungsvorrichtung, insbesondere einem Frontscheinwerfer, eines Fahrzeugs, insbesondere eines Motorrads, vorgesehen, umfassend wenigstens ein Projektionsmodul zur Erzeugung einer Lichtverteilung in einer Umgebung des Fahrzeugs, sowie wenigstens ein Lichtquellenmodul, insbesondere zur Einbringung einer Lichtstrahlung in das Projektionsmodul, wobei das Projektionsmodul eine Mehrzahl von Projektionseinheiten umfasst und wobei das Lichtquellenmodul eine Mehrzahl von Lichtquelleneinheiten umfasst, wobei jede Projektionseinheit wenigstens eine Projektionslinse umfasst und wobei jeder Projektionseinheit wenigstens eine Lichtquelleneinheit zugeordnet ist und wobei wenigstens zwei Projektionslinsen von wenigstens zwei unterschiedlichen Projektionseinheiten eine unterschiedliche Brennweite aufweisen.

In anderen Worten ist erfindungsgemäß vorgesehen, dass ein Beleuchtungsmodul wenigstens ein Projektionsmodul sowie ferner wenigstens ein Lichtquellenmodul umfasst. Das Projektionsmodul ist dazu ausgebildet, das durch eine oder mehrere Lichtquellen des Lichtquellenmoduls emittierte Licht zumindest teilweise in die Umgebung des Fahrzeugs zu projizieren und so eine Lichtverteilung in der Umgebung des Fahrzeugs zu erzeugen. Dabei kann vorgesehen sein, insbesondere wenn das Beleuchtungsmodul im Kontext eines Frontscheinwerfers eines Fahrzeugs verwendet wird, dass zumindest ein Teil des Lichts auf einen vor dem Fahrzeug liegenden Fahrbahnbereich projiziert wird. Hierzu umfasst das Projektionsmodul wenigstens zwei Projektionseinheiten und das Lichtquellenmodul umfasst wenigstens zwei Lichtquelleneinheiten, wobei jede Projektionseinheit wenigstens eine Projektionslinse umfasst und wobei jeder Projektionseinheit wenigstens eine Lichtquelleneinheit zugeordnet ist. Ferner weisen wenigstens zwei Projektionslinsen von wenigstens zwei unterschiedlichen Projektionseinheiten, unterschiedliche Brennweiten auf.

Durch ein erfindungsgemäßes Beleuchtungsmodul ergibt sich der Vorteil, dass durch die Verwendung von Projektionslinsen mit unterschiedlichen Brennweiten in den jeweiligen Projektionseinheiten eine höhere Variabilität der durch das Beleuchtungsmodul erzeugbaren Lichtverteilungen generiert wird. Durch die unterschiedlichen Brennweiten ergeben sich entsprechend unterschiedliche Streubreiten des aus den jeweiligen Projektionslinsen ausfallenden Lichts, wodurch unterschiedliche Bereiche in der Umgebung des Fahrzeugs jeweils den Anforderungen entsprechend ausgeleuchtet werden können. So können mit steigender Brennweite einer Projektionslinse diskrete Bereiche in zunehmender Entfernung des Fahrzeugs mit hoher Intensität ausgeleuchtet werden. Durch eine abnehmende Brennweite können hingegen insbesondere in der Nähe des Fahrzeugs befindliche Bereiche mit einem vergleichsweise breiten Lichtkegel ausgeleuchtet werden. Durch eine variable Ansteuerung einzelner Lichtquelleneinheiten und/oder Lichtquellen kann eine weitere Variabilität geschaffen werden. So können einzelne Lichtquellen bedarfsgerecht eingeschaltet und/oder ausgeschaltet und/oder in ihrer Intensität angepasst werden, um in Abhängigkeit einer gegebenen Fahrsituation eine jeweils angepasste Lichtverteilung durch das Projektionsmodul zu erzeugen. Unter Verwendung eines erfindungsgemäßen Beleuchtungsmoduls können auf diese Weise besonders einfach und effizient Funktionen wie ein adaptives Kurvenlicht zur Ausleuchtung des Kurveninneren und/oder ein adaptives Fernlicht zur Entblendung des Gegenverkehrs bei gleichzeitiger Fernlichtfunktion realisiert werden. Ebenso kann ein Ausleuchtungsverlust aufgrund einer Nickbewegung des Fahrzeugs im Frontbereich (z. B. durch Bremsen) durch eine überlagerte weiterreichende höherliegende Lichtverteilung kompensiert werden.

Unter der Zuordnung einer Lichtquelleneinheit zu einer Projektionseinheit soll vorliegend verstanden werden, dass das durch die Lichtquelleneinheit emittierte Licht im Wesentlichen, insbesondere zu einem überwiegenden Teil, in die der Lichtquelleneinheit zugeordnete Projektionseinheit eingestrahlt wird. Im Rahmen der vorliegenden Erfindung soll die durch das Beleuchtungsmodul generierte Lichtverteilung als eine kumulierte Lichtverteilung verstanden werden, welche sich durch Überlagerung der durch die einzelnen Projektionseinheiten erzeugten Teillichtverteilungen ergibt.

Ein Bezug auf die Fahrzeughochachse und/oder Fahrzeugquerachse und/oder Fahrzeuglängsachse bezieht sich stets auf eine Ausrichtung eines Beleuchtungsmoduls und/oder einer Beleuchtungsvorrichtung gemäß einer bestimmungsgemäßen Einbaulage in dem Fahrzeug.

Eine Hell-Dunkel-Grenze soll vorliegend als eine Grenze einer Lichtverteilung verstanden werden, also eine Begrenzung, über die hinaus kein oder im Wesentlichen kein Licht projiziert wird.

Wenigstens ein Projektionsmodul kann wenigstens zwei oder genau zwei, vorzugsweise wenigstens drei oder genau drei, besonders bevorzugt wenigstens vier oder genau vier, Projektionseinheiten umfassen. Auch die Verwendung von mehr als vier Projektionseinheiten ist denkbar. Eine Verwendung von zwei oder drei Projektionseinheiten hat sich in Bezug auf einen kompakten Aufbau sowie ferner eine flexible Erzeugung bedarfsgerechter Lichtverteilungen als besonders vorteilhaft gezeigt. Alternativ oder zusätzlich kann vorgesehen sein, dass wenigstens eine Lichtquelleneinheit wenigstens eine Lichtquelle umfasst. Vorzugsweise kann wenigstens eine Lichtquelle als eine Leuchtdiode (LED) ausgebildet sein.

Es kann im Rahmen der Erfindung bevorzugt vorgesehen sein, dass wenigstens eine Projektionseinheit eine bzw. genau eine Projektionslinse umfasst. Alternativ oder zusätzlich ist denkbar, dass wenigstens eine Projektionseinheit mehr als eine, insbesondere wenigstens zwei Projektionslinsen umfasst. Die Projektionslinsen wenigstens einer Projektionseinheit können bevorzugt die gleiche Brennweite aufweisen. Besonders bevorzugt hat sich im Rahmen der Erfindung die Verwendung von genau einer Projektionslinse pro Projektionseinheit gezeigt. Hierdurch ergibt sich insbesondere ein einfacher und kostengünstiger Aufbau.

Insbesondere kann vorgesehen sein, dass wenigstens eine Lichtquelleneinheit eine Mehrzahl von Lichtquellen umfasst. Insbesondere ist denkbar, dass wenigstens zwei, insbesondere alle Lichtquellen wenigstens einer Lichtquelleneinheit, insbesondere des Lichtquellenmoduls, unabhängig voneinander steuerbar sind. Hierdurch ergibt sich der Vorteil, dass die Einstrahlung einzelner Lichtquellen in die der jeweiligen Lichtquelleneinheit zugeordneten Projektionslinse bedarfsgerecht reguliert werden können. Insbesondere kann die Steuerung einer Lichtquelle vorliegend ein Einschalten und/oder Ausschalten und/oder die Regulierung der Helligkeit der Lichtquelle umfassen.

Zusätzlich ist erfindungsgemäß vorgesehen, dass wenigstens eine Projektionseinheit wenigstens eine, Vorsatzoptik umfasst, wobei die Vorsatzoptik und wenigstens eine Projektionslinse der Projektionseinheit derart zueinander positioniert sind, dass ein Brennpunkt der Projektionslinse innerhalb der Vorsatzoptik liegt. In anderen Worten kann vorgesehen sein, dass wenigstens Projektionseinheit wenigstens eine Vorsatzoptik umfasst, wobei die Vorsatzoptik wenigstens einer Projektionslinse der Projektionseinheit zugeordnet ist. In Bezug auf wenigstens eine Projektionseinheit ist erfindungsgemäß wenigstens eine Vorsatzoptik derart angeordnet, dass das von einer der Projektionseinheit zugeordneten Lichtquelleneinheit emittierte Licht zunächst in die Vorsatzoptik und aus der Vorsatzoptik in wenigstens eine Projektionslinse eingestrahlt wird. In anderen Worten kann wenigstens eine Vorsatzoptik bevorzugt an einer Lichteintrittsseite wenigstens einer Projektionslinse angeordnet sein. Durch die Vorsatzoptik kann somit eine primäre Lichtformung und durch die Projektionslinse eine sekundäre Lichtformung realisiert werden. Es ist in Bezug auf wenigstens eine Projektionseinheit erfindungsgemäßvorgesehen, dass wenigstens eine Projektionslinse und wenigstens eine Vorsatzoptik derart zueinander angeordnet sind, dass ein Brennpunkt der Projektionslinse innerhalb der Vorsatzoptik angeordnet ist. Dies hat sich als insgesamt vorteilhaft in Bezug auf die Generierung einer optimierten Lichtverteilung durch das Beleuchtungsmodul gezeigt. Eine Vorsatzoptik umfasst erfindungsgemäß wenigstens eine Linse.

Durch das Zusammenwirken einer Vorsatzoptik, wenigstens einer Lichtquelle und einer Projektionslinse kann wenigstens eine Teillichtverteilung einer Projektionseinheit erzeugt werden. Durch die Verwendungen mehrerer Vorsatzoptiken und/oder mehrerer Lichtquellen und/oder mehrere Vorsatzoptikbereiche bei wenigstens einer Vorsatzoptik können mehrere Teillichtverteilungen pro Projektionseinheit erzeugt werden. Die insgesamt durch ein Beleuchtungsmodul generierte Lichtverteilung ergibt sich somit kumulativ aus den einzelnen durch die jeweiligen Projektionseinheiten in Zusammenwirkung mit den entsprechenden Lichtquelleneinheiten erzeugten Teillichtverteilungen. Durch die Verwendung mehrerer Vorsatzoptiken und/oder Vorsatzoptikbereiche und/oder Lichtquellen können mehrere Teillichtverteilungen pro Projektionslinse erzeugt werden, wodurch eine flexiblere Anpassung der insgesamt durch das Beleuchtungsmodul generierten Lichtverteilung bspw. in Abhängigkeit einer aktuellen Fahrsituation realisierbar ist.

Zusätzlich oder alternativ ist denkbar, dass wenigstens eine Vorsatzoptik wenigstens zwei unterschiedliche Vorsatzoptikbereiche umfasst, wobei insbesondere durch jeden Vorsatzoptikbereich, insbesondere im Zusammenwirken mit wenigstens einer Projektionslinse der Projektionseinheit und/oder wenigstens einer Lichtquelle der der Projektionseinheit zugeordneten Lichtquelleneinheit, wenigstens eine Lichtverteilung bzw. Teillichtverteilung erzeugbar ist. So kann bspw. jedem Vorsatzoptikbereich wenigstens eine Lichtquelle zugeordnet sein. In anderen Worten kann wenigstens eine Vorsatzoptik wenigstens zwei Vorsatzoptikbereiche umfassen, wobei sich die Vorsatzoptikbereiche in Bezug auf ihre Lichtformungseigenschaften unterscheiden, sodass durch die jeweiligen Vorsatzoptikbereiche, insbesondere in Verbindung mit wenigstens einer Lichtquelle und/oder Projektionslinse, unterschiedliche Lichtverteilungen erzeugbar sind. Es ist vorliegend denkbar, dass mehrere Vorsatzoptiken und/oder mehrere Vorsatzoptikbereiche einer Vorsatzoptik mit einer einzigen Projektionslinse zusammenwirken. Insbesondere kann vorgesehen sein, dass wenigstens eine Vorsatzoptik wenigstens einen erster Vorsatzoptikbereich zur Erzeugung wenigstens einer Basislichtverteilung und wenigstens einen zweiten Vorsatzoptikbereich zur Erzeugung wenigstens einer Zusatzlichtverteilung umfasst. Zur Erzeugung einer Lichtverteilung kann vorgesehen sein, dass der jeweilige Vorsatzoptikbereich mit wenigstens einer Lichtquelleneinheit bzw. Lichtquelle und/oder wenigstens einer Projektionslinse zusammenwirkt.

Es kann im Rahmen der Erfindung vorgesehen sein, dass wenigstens eine Projektionseinheit wenigstens zwei oder mehr als zwei Vorsatzoptiken umfasst, wobei vorzugsweise die Vorsatzoptiken, insbesondere im Zusammenwirken mit wenigstens einer Projektionslinse der Projektionseinheit und/oder wenigstens einer Lichtquelle der der Projektionseinheit zugeordneten Lichtquelleneinheit, dazu ausgebildet sind, wenigstens zwei unterschiedliche Lichtverteilungen bzw. Teillichtverteilungen zu erzeugen. Insbesondere kann vorgesehen sein, dass wenigstens eine erster Vorsatzoptik zur Erzeugung wenigstens einer Basislichtverteilung und wenigstens eine zweite Vorsatzoptik zur Erzeugung wenigstens einer Zusatzlichtverteilung vorgesehen ist. Zur Erzeugung einer Lichtverteilung kann vorgesehen sein, dass die jeweilige Vorsatzoptik mit wenigstens einer Lichtquelleneinheit bzw. Lichtquelle und/oder wenigstens einer Projektionslinse zusammenwirkt.

Es ist im Rahmen der vorliegenden Erfindung denkbar, dass wenigstens einer, insbesondere jeder, Vorsatzoptik wenigstens einer Projektionseinheit wenigstens eine Lichtquelle, insbesondere wenigstens eine Lichtquelle der der Projektionseinheit zugeordneten Lichtquelleneinheit, zugeordnet ist. Zusätzlich oder alternativ kann jedem Vorsatzoptikbereich wenigstens einer Vorsatzoptik wenigstens eine Lichtquelle zugeordnet sein.

Es kann im Rahmen der Erfindung vorgesehen sein, dass dir Projektionseinheiten, insbesondere in Bezug auf eine Fahrzeughochachse, übereinander angeordnet sind. Optional kann vorgesehen sein, dass diejenige Projektionseinheit, welche die Projektionslinse mit der kleinsten Brennweite umfasst, insbesondere in Bezug auf die Fahrzeughochachse, die unterste Projektionseinheit ausbildet. Zusätzlich oder alternativ ist es denkbar, dass diejenige Projektionseinheit, welche die Projektionslinse mit der größten Brennweite umfasst, insbesondere in Bezug auf die Fahrzeughochachse, die oberste Projektionseinheit ausbildet. Insbesondere ist denkbar, dass die Brennweite der Projektionslinsen von der untersten Projektionseinheit in Richtung der obersten Projektionseinheit sukzessive abnimmt. In anderen Worten kann vorgesehen sein, dass entlang der Fahrzeughochachse die Brennweite der Projektionslinsen der Projektionseinheiten ausgehend von der untersten Projektionseinheit abnimmt. Eine solche Anordnung der Projektionslinsen bzw. Projektionseinheiten gemäß einer sukzessiven Zu- bzw. Abnahme der Brennweite entlang der Fahrzeughochachse hat sich als besonders vorteilhaft in Bezug auf die Erzeugung fahrsituationsoptimierter Lichtverteilungen durch ein Beleuchtungsmodul gezeigt.

Es kann im Rahmen der Erfindung vorgesehen sein, dass wenigstens eine Projektionseinheit dazu ausgebildet ist wenigstens eine, insbesondere genau eine, Basislichtverteilung mit einer Hell-Dunkel-Grenze zu erzeugen. Es kann vorteilhaft vorgesehen sein, dass die Hell-Dunkel-Grenze der Basislichtverteilung parallel oder im Wesentlichen parallel zu einer Fahrzeugquerachse orientiert ist. Eine solche Basislichtverteilung kann insbesondere durch Zusammenwirken wenigstens einer Projektionslinse, wenigstens einer Vorsatzoptik sowie wenigstens einer Lichtquelle der der Projektionseinheit zugeordneten Lichtquelleneinheit erzeugt werden bzw. erzeugbar sein. So kann die Basislichtverteilung bspw. die Funktion eines herkömmlichen Abblendlichts und/oder einer Vorfeldbeleuchtung erfüllen, insbesondere bei einer Geradeausfahrt des Fahrzeugs.

Zusätzlich oder alternativ ist denkbar, dass wenigstens eine Projektionseinheit dazu ausgebildet ist, insbesondere zusätzlich zu der Basislichtverteilung, wenigstens eine Zusatzlichtverteilung mit einer Hell-Dunkel-Grenze zu erzeugen, wobei insbesondere die Hell-Dunkel-Grenze der Zusatzlichtverteilung zu der Hell-Dunkel-Grenze der Basislichtverteilung einen, insbesondere rein, rotatorischen und/oder, insbesondere rein, translatorischen Versatz aufweist. Mit einem rotatorischen Versatz ist vorliegend gemeint, dass die Hell-Dunkel-Grenze der Zusatzlichtverteilung zu der Hell-Dunkel-Grenze der Basislichtverteilung geneigt orientiert ist. Ein translatorischer Versatz kann vorzugsweise ein translatorischer Versatz entlang der Fahrzeughochachse und/oder Fahrzeugquerachse sein. Eine solche Zusatzlichtverteilung kann insbesondere durch Zusammenwirken wenigstens einer Projektionslinse, wenigstens einer Vorsatzoptik und/oder wenigstens eines Vorsatzoptikbereichs sowie wenigstens einer Lichtquelle der der Projektionseinheit zugeordneten Lichtquelleneinheit erzeugt werden bzw. erzeugbar sein. Dabei können sich vorzugsweise die zur Erzeugung einer Basislichtverteilung und einer Zusatzlichtverteilung oder die zur Erzeugung unterschiedlicher Zusatzlichtverteilung verwendeten Lichtquellen und/oder Vorsatzoptiken und/oder Projektionslinsen und/oder Vorsatzoptikbereiche jeweils unterscheiden.

Es kann vorgesehen sein, dass wenigstens eine Projektionseinheit dazu ausgebildet ist, insbesondere zusätzlich zu der Basislichtverteilung, mehrere Zusatzlichtverteilungen zu erzeugen. Dabei kann insbesondere die Hell-Dunkel-Grenze wenigstens einer Zusatzlichtverteilung wenigstens einen rotatorischen Versatz zu der Hell-Dunkel-Grenze der Basislichtverteilung aufweisen und wenigstens eine Hell-Dunkel-Grenze wenigstens einer Zusatzlichtverteilung einen translatorischen Versatz zu der Hell-Dunkel-Grenze der Basislichtverteilung aufweisen. Dabei kann, insbesondere bei einem rein translatorischen Versatz, die Hell-Dunkel-Grenze wenigstens einer Zusatzlichtverteilung parallel oder im Wesentlichen parallel zu der Hell-Dunkel-Grenze der Basislichtverteilung orientiert sein.

So können in Abhängigkeit einer Fahrsituation bzw. Umgebungssituation Zusatzlichtverteilungen eingeschaltet, ausgeschaltet bzw. in ihrer Intensität reguliert werden, um eine für einen Fahrer eines Fahrzeugs optimierte Ausleuchtung der Umgebung zu realisieren.

Durch einen rotatorischen Versatz einer Hell-Dunkel-Grenze einer Zusatzlichtverteilung zu der Hell-Dunkel-Grenze einer Basislichtverteilung kann eine zumindest abschnittsweise keilförmige Teillichtverteilung (Zusatzlichtverteilung) erzeugt werden. Hierdurch wird insbesondere bei der Verwendung des Beleuchtungsmoduls in einem Motorrad ermöglicht, dass bei einer Kurvenfahrt des Motorrads und einer damit einhergehenden Neigung des Motorrads, das Kurveninnere durch die keilförmige Teillichtverteilung ausgeleuchtet werden kann. Eine aufgrund der Neigung des Motorrads ansonsten reduzierte Beleuchtung des Kurveninneren kann auf diese Weise kompensiert bzw. sogar überkompensiert werden, wodurch eine verbesserte Übersicht für den Fahrer geschaffen werden kann. Durch einen translatorischen Versatz einer Zusatzlichtverteilung zu der Basislichtverteilung, insbesondere ohne einen zusätzlichen rotatorischen Versatz, kann hingehen eine Änderung der Basislichtverteilung aufgrund einer Nickbewegung des Fahrzeugs kompensiert bzw. überkompensiert werden. So kann bei einer Verzögerung des Fahrzeugs und einer daraus resultierenden Nickbewegung nach unten eine Teillichtverteilung mit einer Hell-Dunkel-Grenze erzeugt werden, welche, insbesondere in Bezug auf die Fahrzeughochachse, über der Hell-Dunkel-Grenze der Basislichtverteilung verläuft. Ein entsprechend umgekehrtes Vorgehen ist bei einer Beschleunigung des Fahrzeugs und einer Nickbewegung nach oben denkbar.

Es kann vorgesehen sein, dass der Neigungswinkel zwischen Hell-Dunkel-Grenze wenigstens einer Basislichtverteilung und der Hell-Dunkel-Grenze wenigstens einer Zusatzlichtverteilung, insbesondere in Bezug auf eine durch die Projektionseinheit, welche die Projektionslinse mit der kleinsten Brennweite umfasst, erzeugte Lichtverteilung, zwischen 15° und 30°, insbesondere zwischen 19° und 26°, vorzugsweise zwischen 23° und 25°, besonders bevorzugt 24° beträgt. Alternativ oder zusätzlich kann vorgesehen sein, dass der Neigungswinkel zwischen der Hell-Dunkel-Grenze wenigstens einer Basislichtverteilung und der Hell-Dunkel-Grenze wenigstens einer Zusatzlichtverteilung, insbesondere in Bezug auf eine durch die Projektionseinheit, welche die Projektionslinse mit der größten Brennweite umfasst, erzeugte Lichtverteilung, zwischen 2° und 15°, insbesondere zwischen 5° und 12°, vorzugsweise zwischen 9° und 11°, besonders bevorzugt 10° beträgt. Zusätzlich oder alternativ kann vorgesehen sein, dass der Neigungswinkel zwischen der Hell-Dunkel-Grenze wenigstens einer Basislichtverteilung und der Hell-Dunkel-Grenze wenigstens einer Zusatzlichtverteilung in Bezug auf die durch die Projektionseinheiten erzeugten Lichtverteilungen mit steigender Brennweite der Projektionslinsen der jeweiligen Projektionseinheiten sukzessive abnimmt.

Zusätzlich oder alternativ kann bei einem Beleuchtungsmodul vorgesehen sein, dass die Brennweite der Projektionslinse mit der größten Brennweite wenigstens das Doppelte der Brennweite der Projektionslinse mit der kleinsten Brennweite beträgt. Zusätzlich oder alternativ ist vorliegend denkbar, dass in Bezug auf jeweils zwei, insbesondere in Bezug auf die Fahrzeughochachse, benachbart angeordnete Projektionseinheiten die Brennweite der Projektionslinse mit der größeren Brennweite ein ganzzahliges Vielfaches der Brennweite der Projektionslinse mit der kleineren Brennweite beträgt. Durch eine solche Verteilung hat sich der Vorteil gezeigt, dass eine besonders vorteilhafte und in Bezug auf zahlreiche Fahrsituationen optimierte Lichtverteilung durch das Beleuchtungsmodul erzeugbar ist.

Es kann im Rahmen der vorliegenden Erfindung ferner bei einem Beleuchtungsmodul von Vorteil sein, wenn die Projektionslinsen von wenigstens zwei Projektionseinheiten in Bezug auf eine Lichteintrittsseite der Projektionslinsen in einer gemeinsamen Ebene angeordnet sind. Hierdurch hat sich der Vorteil eines insgesamt einfachen und kompakten Aufbaus sowie ferner die Erzeugung einer vorteilhaften Lichtverteilung gezeigt.

Ferner kann bei einem Beleuchtungsmodul vorgesehen sein, dass wenigstens eine Projektionslinse, insbesondere alle Projektionslinsen, an einer Lichteintrittsseite eine planare Oberfläche aufweist und/oder dass wenigstens eine Projektionslinse an einer Lichtaustrittsseite eine konkave Oberfläche aufweist. Hierdurch ergibt sich eine in Bezug auf eine optimierte Lichtverteilung vorteilhafte Lichtformung durch die Projektionslinse. Des Weiteren ergibt sich damit eine einfache Möglichkeit die durch das Beleuchtungsmodul erzeugte Lichtverteilung während des Zusammenbaus bei der Serienfertigung nur über Verschiebung der Projektionslinsen normal zur optischen Achse relativ zueinander toleranzoptimiert einzustellen.

Es kann im Rahmen der Erfindung bei einem Beleuchtungsmodul vorgesehen sein, dass wenigstens ein Beleuchtungsmodul wenigstens eine Leiterplatte umfasst. Insbesondere ist denkbar, dass wenigstens eine Leiterplatte durch wenigstens ein Lichtquellenmodul umfasst ist. Vorzugsweise kann wenigstens eine Lichtquelleneinheit bzw. Lichtquelle auf der Leiterplatte angeordnet sein. Hierdurch ergibt sich ein einfacher und kostengünstiger Aufbau auch im Hinblick auf eine Steuerung und Energieversorgung der betreffenden Lichtquelle bzw. Lichtquelleneinheit. Zusätzlich oder alternativ ist denkbar, dass alle Lichtquellen wenigstens einer Lichtquelleneinheit und/oder wenigstens eines Lichtquellenmoduls auf einer gemeinsamen Leiterplatte angeordnet sind. Hierdurch ergibt sich ein kompakter und einfacher Aufbau.

Es ist in Bezug auf die vorliegende Erfindung ferner bei einem Beleuchtungsmodul vorstellbar, dass wenigstens ein Beleuchtungsmodul wenigstens eine Steuereinheit umfasst, wobei vorzugsweise das Beleuchtungsmodul zumindest teilweise durch die Steuereinheit steuerbar ist. Hierunter soll vorliegend verstanden werden, dass wenigstens eine Lichtquelleneinheit bzw. Lichtquelle des Lichtquellenmoduls des Beleuchtungsmoduls durch die Steuereinheit dahingehend steuerbar ist, dass ein Ausschalten und/oder Einschalten und/oder ein Regulieren der Helligkeit der betreffenden Lichtquelleneinheit bzw. Lichtquelle durch die Steuereinheit durchführbar ist. Zusätzlich oder alternativ kann vorgesehen sein, dass wenigstens eine Beleuchtungsvorrichtung wenigstens eine Steuereinheit umfasst, wobei vorzugsweise durch die Steuereinheit wenigstens ein Beleuchtungsmodul, insbesondere alle Beleuchtungsmodule, der Beleuchtungsvorrichtung steuerbar sind. Wenigstens eine Steuereinheit kann Mittel zur Datenverarbeitung, insbesondere wenigstens einen Prozessor und/oder wenigstens einen Datenspeicher und/oder wenigstens einen, insbesondere nichtflüchtigen, Datenspeicher umfassen.

Es kann im Rahmen der Erfindung ferner bei einem Beleuchtungsmodul vorgesehen sein, dass wenigstens ein Lichtquellenmodul wenigstens einen Kühlkörper umfasst. Der Kühlkörper ist insbesondere dazu vorgesehen, die durch die Lichtquelleneinheiten bzw. Lichtquellen des Lichtquellenmoduls emittierte Wärme abzuführen. Wenigstens ein Kühlkörper kann wenigstens eine Kühlrippe umfassen.

Es ist im Rahmen der vorliegenden Erfindung denkbar, dass alle Lichtquelleneinheiten wenigstens eines Lichtquellenmoduls in einer gemeinsamen Ebene angeordnet sind. Zusätzlich oder alternativ ist denkbar, dass alle Lichtquellen wenigstens einer Lichtquelleneinheit und/oder wenigstens eines Lichtquellenmoduls in einer gemeinsamen Ebene angeordnet sind. Hierdurch ergibt sich ein einfacher Aufbau des Beleuchtungsmoduls.

Die obenstehende Aufgabe wird ferner gemäß einem zweiten Aspekt der Erfindung gelöst durch eine Beleuchtungsvorrichtung für ein Fahrzeug, wobei die Beleuchtungsvorrichtung wenigstens ein, insbesondere erfindungsgemäßes, Beleuchtungsmodul umfasst. Vorzugsweise kann das Beleuchtungsmodul ein Beleuchtungsmodul gemäß dem ersten Aspekt der vorliegenden Erfindung, insbesondere ein Beleuchtungsmodul nach einem der Ansprüche 1 - 8, sein. Durch eine erfindungsgemäße Beleuchtungsvorrichtung ergeben sich die gleichen Vorteile, wie sie bereits in Bezug auf ein erfindungsgemäßes Beleuchtungsmodul beschrieben worden sind.

Wenigstens eine Beleuchtungsvorrichtung kann wenigstens zwei oder genau zwei, insbesondere erfindungsgemäße, Beleuchtungsmodule umfassen. Wenigstens zwei Beleuchtungsmodule können spiegelsymmetrisch aufgebaut sein. Hierdurch ergibt sich der Vorteil, dass durch die jeweiligen Beleuchtungsmodule sowohl Linksals auch Rechtskurven entsprechend optimiert ausgeleuchtet werden können.

Insbesondere kann vorgesehen sein, dass die Beleuchtungsvorrichtung als ein Scheinwerfer, insbesondere als ein Frontscheinwerfer, für ein Fahrzeug ausgebildet ist. Als besonders bevorzugt hat sich der Einsatz einer erfindungsgemäßen Beleuchtungsvorrichtung als Frontscheinwerfer für ein Motorrad erwiesen.

Die obenstehende Aufgabe wird gemäß einem dritten Aspekt der Erfindung ferner gelöst durch ein Fahrzeug, wobei vorzugsweise das Fahrzeug wenigstens eine, insbesondere erfindungsgemäße, Beleuchtungsvorrichtung und/oder wenigstens ein, insbesondere erfindungsgemäßes, Beleuchtungsmodul umfasst. Besonders bevorzugt kann vorgesehen sein, dass das Fahrzeug als ein einspuriges Fahrzeug, insbesondere als ein Motorrad, ausgebildet ist. Zusätzlich oder alternativ kann vorgesehen sein, dass die Beleuchtungsvorrichtung als eine erfindungsgemäße Beleuchtungsvorrichtung, insbesondere eine Beleuchtungsvorrichtung nach Anspruch 9, ausgebildet ist und/oder dass das Beleuchtungsmodul als ein erfindungsgemäßes Beleuchtungsmodul, insbesondere ein Beleuchtungsmodul gemäß einem ersten Aspekt der Erfindung bzw. gemäß einem der Ansprüche 1 bis 8, ausgebildet ist.

In Bezug auf ein erfindungsgemäßes Fahrzeug gemäß dem dritten Aspekt der Erfindung ergeben sich die gleichen Vorteile, wie sie bereits in Bezug auf ein erfindungsgemäßes Beleuchtungsmodul und/oder eine erfindungsgemäße Beleuchtungsvorrichtung gemäß dem ersten und dem zweiten Aspekt der Erfindung beschrieben wurden.

Die obenstehende Aufgabe wird gemäß einem vierten Aspekt der Erfindung ferner gelöst durch ein Verfahren zur Steuerung eines, insbesondere erfindungsgemäßen, Beleuchtungsmoduls, insbesondere einem Beleuchtungsmodul gemäß dem ersten Aspekt der Erfindung bzw. gemäß einem der Ansprüche 1 bis 8, wobei das Verfahren wenigstens einen, insbesondere wenigstens zwei oder alle, der folgenden Schritte umfasst:
- Einschalten und/oder Ausschalten und/oder Regulieren der Helligkeit wenigstens einer Lichtquelle des Lichtquellenmoduls in Abhängigkeit einer, insbesondere zeitaktuellen, Verzögerung und/oder Beschleunigung des Fahrzeugs,
- Einschalten und/oder Ausschalten und/oder Regulieren der Helligkeit wenigstens einer Lichtquelle des Lichtquellenmoduls in Abhängigkeit einer, insbesondere zeitaktuellen, Neigung des Fahrzeugs,
- Einschalten und/oder Ausschalten und/oder Regulieren der Helligkeit wenigstens einer Lichtquelle des Lichtquellenmoduls in Abhängigkeit einer, insbesondere zeitaktuellen, Fahrzeuggeschwindigkeit,
- Einschalten und/oder Ausschalten und/oder Regulieren der Helligkeit wenigstens einer Lichtquelle des Lichtquellenmoduls in Abhängigkeit wenigstens eines entgegenkommenden Fahrzeugs.

Dabei kann vorzugsweise vorgesehen sein, dass durch das Einschalten und/oder Ausschalten und/oder Regulieren der Helligkeit wenigstens einer Lichtquelle wenigstens eine durch das Beleuchtungsmodul zusätzlich zu einer Basislichtverteilung generierte Zusatzlichtverteilung aktiviert (eingeschaltet), deaktiviert (ausgeschaltet) und/oder in ihrer Helligkeit reguliert wird.

Im Zuge einer Verzögerung und/oder Beschleunigung eines Fahrzeugs kann es zu einer Nickbewegung des Fahrzeugs bzw. der Beleuchtungsvorrichtungen, insbesondere Frontscheinwerfer, des Fahrzeugs kommen. Aufgrund der Nickbewegung kommt es zu einer ungewollten Verschiebung der durch die Beleuchtungsvorrichtungen generierten Lichtverteilung. Hierdurch kann das Sichtfeld des Fahrers, zumindest temporär, eingeschränkt werden. Durch Hinzuschalten zusätzlicher Lichtquellen kann die Hell-Dunkel-Grenze der Lichtverteilung eines Beleuchtungsmoduls gezielt verschoben werden, sodass die Verschiebung der Lichtverteilung durch die Verschiebung der Hell-Dunkel-Grenze zumindest teilweise kompensiert wird.

Bei der Kurvendurchfahrt eines Fahrzeugs, insbesondere Motorrads, erfolgt eine, zumindest temporäre, Lageänderung der Beleuchtungsvorrichtung, insbesondere des Frontscheinwerfers, des Fahrzeugs, aufgrund der im Zuge der Kurvendurchfahrt erforderlichen Neigung des Fahrzeugs. Hierdurch erfolgt eine der Lageänderung des Fahrzeugs entsprechende Veränderung der durch die Beleuchtungsvorrichtung erzeugten Lichtverteilung, wodurch es, insbesondere im Kurveninneren, zu einer abnehmenden Ausleuchtung kommt. Durch das Hinzuschalten bzw. einer Erhöhung der Intensität wenigstens einer Lichtquelle kann im Randbereich der durch die Beleuchtungsvorrichtung erzeugten Lichtverteilung eine keilförmige Teillichtverteilung zur Ausleuchtung des Kurveninneren erzeugt werden, um die durch die Neigung des Fahrzeugs entstandenen Einbußen zumindest teilweise zu kompensieren.

Bei einer hohen Geschwindigkeit ist eine Ausleuchtung der Umgebung in einer größeren Entfernung vor einem Fahrzeug von höherem Interesse als bei langsamen Geschwindigkeiten. Durch die Regulierung der Helligkeit bzw. das Aus- und/oder Einschalten einzelner Lichtquellen kann auf Grundlage eines erfindungsgemäßen Beleuchtungsmoduls so eine für die aktuelle Fahrzeuggeschwindigkeit optimierte Lichtverteilung erzeugt werden.

Im Falle eines oder mehrerer entgegenkommender Fahrzeuge kann durch das Ausschalten bzw. Regulieren der Helligkeit einzelner Lichtquellen eine Entblendung des Gegenverkehrs zuverlässig sichergestellt werden, wobei der verbleibende Fahrbahnbereich weiterhin möglichst optimal für einen Fahrer des Fahrzeugs ausgeleuchtet wird. Haben die Fahrzeuge des Gegenverkehrs die durch die Beleuchtungsvorrichtung bzw. das Beleuchtungsmodul generierte Lichtverteilung passiert, so kann die Helligkeit der betreffenden Lichtquellen wieder nach oben reguliert bzw. können diese wieder eingeschaltet werden.

Die obenstehende Aufgabe wird ferner gemäß dem fünften Aspekt der vorliegenden Erfindung gelöst durch ein Computerprogrammprodukt nach Anspruch 11, umfassend Befehle, die bewirken, dass ein erfindungsgemäßes Beleuchtungsmodul, insbesondere ein Beleuchtungsmodul nach dem ersten Aspekt der vorliegenden Erfindung bzw. einem der Ansprüche 1 bis 7, Verfahrensschritte gemäß einem erfindungsgemäßen Verfahren, insbesondere einem Verfahren gemäß dem vierten Aspekt der vorliegenden Erfindung bzw. gemäß Anspruch 10, ausführt. Vorzugsweise kann das Verfahren zumindest teilweise durch eine Steuereinheit des Beleuchtungsmoduls ausgeführt werden.

Die obenstehende Aufgabe wird ferner gemäß einem sechsten Aspekt der vorliegenden Erfindung gelöst durch ein computerlesbares Speichermedium nach Anspruch 12, auf dem ein erfindungsgemäßes Computerprogrammprodukt, insbesondere ein Computerprogrammprodukt gemäß dem fünften Aspekt der vorliegenden Erfindung bzw. gemäß Anspruch 11, gespeichert ist. Auch wird die obenstehende Aufgabe gemäß einem siebten Aspekt der vorliegenden Erfindung gelöst durch ein Datenträgersignal nach Anspruch 13, wobei das Datenträgersignal ein erfindungsgemäßes Computerprogrammprodukt, insbesondere ein Computerprogrammprodukt nach dem fünften Aspekt der vorliegenden Erfindung bzw. gemäß Anspruch 13, überträgt.

In Bezug auf ein erfindungsgemäßes Computerprogrammprodukt und/oder ein erfindungsgemäßes computerlesbares Speichermedium und/oder ein erfindungsgemäßes Datenträgersignal ergeben sich die gleichen Vorteile, wie sie bereits in Bezug auf ein erfindungsgemäßes Beleuchtungsmodul und/oder eine erfindungsgemäße Beleuchtungsvorrichtung und/oder ein erfindungsgemäßes Verfahren beschrieben wurden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
- Fig. 1: eine schematische Ansicht eines Beleuchtungsmoduls,
- Fig. 2: eine schematische Ansicht eine Projektionseinheit,
- Fig. 3: eine schematische Ansicht einer Lichtverteilung,
- Fig. 4: eine schematische Ansicht einer Lichtverteilung,
- Fig. 5: eine schematische Ansicht einer Lichtverteilung,
- Fig. 6: eine schematische Ansicht einer Beleuchtungsvorrichtung,
- Fig. 7: eine schematische Ansicht eines Fahrzeugs und
- Fig. 8: eine schematische Ansicht eines Verfahrens.

In den Figuren werden für die gleichen technischen Merkmale, auch von unterschiedlichen Ausführungsbeispielen, die identischen Bezugszeichen verwendet.

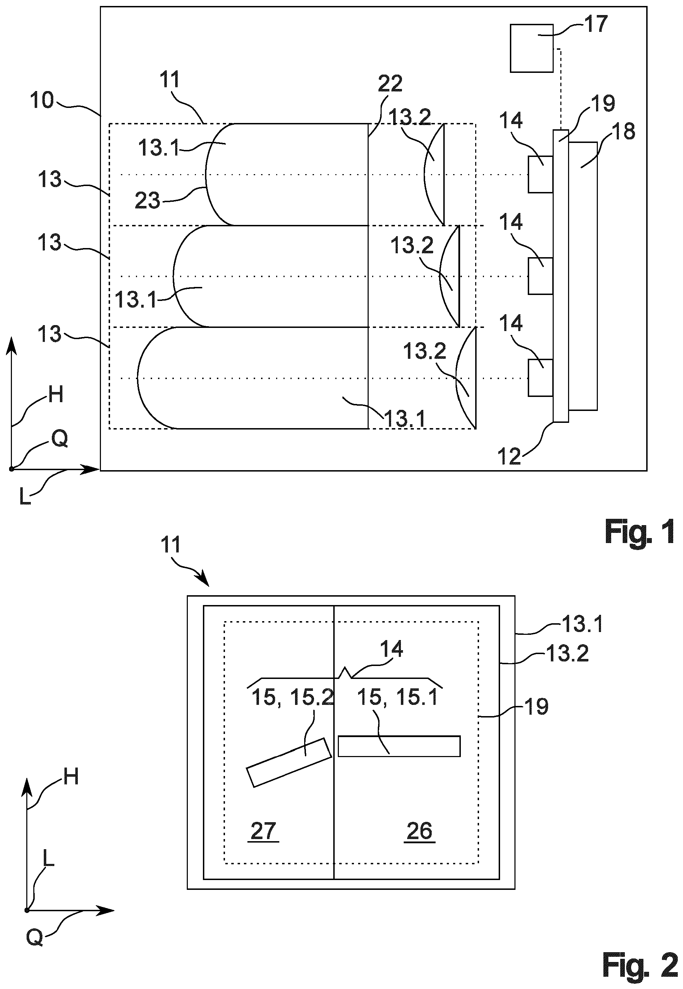

Fig. 1 zeigt eine schematische Ansicht eines Beleuchtungsmoduls 10. Das Beleuchtungsmodul 10 umfasst wenigstens ein Projektionsmodul 11 zur Erzeugung einer Lichtverteilung in einer Umgebung des Fahrzeugs 100 sowie wenigstens ein Lichtquellenmodul 12. Das Projektionsmodul 11 umfasst eine Mehrzahl von Projektionseinheiten 13, und das Lichtquellenmodul 12 umfasst eine Mehrzahl von Lichtquelleneinheiten 14, wobei jede Projektionseinheit 13 wenigstens eine Projektionslinse 13.1 umfasst und wobei jeder Projektionseinheit 13 jeweils wenigstens eine Lichtquelleneinheit 14 zugeordnet ist, sodass das von der Lichtquelleneinheit 14 emittierte Licht im Wesentlichen in die der Lichtquelleneinheit 14 zugeordneten Projektionseinheit 13 eingestrahlt wird. Dies ist in Fig. 1 durch die gepunkteten Linien angedeutet. Ferner weisen die Projektionslinsen 13.1 der Projektionseinheiten 13 jeweils eine unterschiedliche Brennweite auf.

Durch ein erfindungsgemäßes Beleuchtungsmodul 10 ergibt sich der Vorteil, dass durch die Verwendung mehrerer Projektionseinheiten 13 mit Projektionslinsen 13.1 unterschiedlicher Brennweiten eine höhere Variabilität der durch das Beleuchtungsmodul 10 erzeugbaren Lichtverteilungen generiert wird. Durch die unterschiedlichen Brennweiten ergeben sich entsprechend unterschiedliche Streubreiten des aus den jeweiligen Projektionslinsen 13 ausfallenden Lichts, wodurch unterschiedliche Bereiche in der Umgebung des Fahrzeugs jeweils den Anforderungen entsprechend ausgeleuchtet werden können.

Aus Fig. 1 wird ersichtlich, dass die Projektionseinheiten 13 in Bezug auf die Fahrzeughochachse H übereinander angeordnet sind. Dabei umfasst die in Bezug auf die Fahrzeughochachse H unterste Projektionseinheit 13 des Projektionsmoduls 11 die Projektionslinse 13.1 mit der größten Brennweite. Ferner umfasst die in Bezug auf die Fahrzeughochachse H oberste Projektionseinheit 13 des Projektionsmoduls 11 die Projektionslinse 13.1 mit der kleinsten Brennweite auf. Durch eine solche Verteilung hat sich der Vorteil gezeigt, dass eine besonders vorteilhafte und in Bezug auf zahlreiche Fahrsituationen optimierte Lichtverteilung durch das Beleuchtungsmodul 10 erzeugbar ist.

Aus Fig. 1 wird ferner ersichtlich, dass die Projektionslinsen 13.1 der Projektionseinheiten 13 in Bezug auf eine Lichteintrittsseite 22 der Projektionslinsen 13.1 in einer gemeinsamen Ebene angeordnet sind. Ferner weisen die Projektionslinsen 13.1 an der Lichteintrittsseite 22 eine planare Oberfläche sowie an der Lichtaustrittsseite 23 eine konkave Oberfläche auf. Hierdurch ergibt sich eine in Bezug auf eine optimierte Lichtverteilung vorteilhafte Lichtformung durch die Projektionslinsen 13. Auch sind die Lichtquelleneinheiten 14 in einer gemeinsamen Ebene angeordnet.

Aus Fig. 1 wird ferner ersichtlich, dass die Projektionseinheiten 13 jeweils wenigstens eine Vorsatzoptik 13.2 umfassen, wobei jeweils die Projektionslinse 13.1 und die Vorsatzoptik 13.2 der Projektionseinheit 13 derart zueinander positioniert sind, dass das von der der jeweiligen Projektionseinheit 13 zugeordneten Lichtquelleneinheit 14 emittierte Licht zunächst in die Vorsatzoptik 13.2 und aus der Vorsatzoptik 13.2 in die Projektionslinse 13.1 eingestrahlt wird. Durch die Vorsatzoptik 13.2 kann somit eine primäre Lichtformung und durch die Projektionslinse 13.1 eine sekundäre Lichtformung realisiert werden.

Ferner ist in Bezug auf die Projektionseinheiten 13 vorliegend vorgesehen, dass die Projektionslinsen 13.1 und die Vorsatzoptiken 13.2 jeweils so zueinander angeordnet sind, dass ein Brennpunkt der jeweiligen Projektionslinse 13.1 innerhalb der jeweils zugeordneten Vorsatzoptik 13.2 angeordnet ist. Dies hat sich als insgesamt vorteilhaft in Bezug auf die Generierung einer optimierten Lichtverteilung durch das Beleuchtungsmodul 10 gezeigt.

Aus Fig. 1 wird ferner ersichtlich, dass das Lichtquellenmodul 12 wenigstens eine Leiterplatte 19 umfasst, wobei die Lichtquelleneinheiten 14 auf der Leiterplatte 19 angeordnet sind. Hierdurch ergibt sich ein einfacher und kostengünstiger Aufbau auch im Hinblick auf eine Steuerung und Energieversorgung der betreffenden Lichtquelleneinheiten 14. Ferner umfasst das Lichtquellenmodul 12 wenigstens einen Kühlkörper 18 zur Abführung der durch die auf der Leiterplatte 19 angeordneten Lichtquelleneinheiten 14 emittierten Wärme.

Aus Fig. 1 wird ferner ersichtlich, dass das Beleuchtungsmodul 10 wenigstens eine Steuereinheit 17 umfasst, wobei die Steuereinheit 17 dazu ausgebildet ist, das Lichtquellenmodul 12, insbesondere die Lichtquelleneinheiten 14, zu steuern.

Fig. 2 zeigt eine schematische Darstellung einer Projektionseinheit 11, wobei die Projektionseinheit 11 dazu ausgebildet ist wenigstens eine Basislichtverteilung 24 und eine Zusatzlichtverteilung 25 zu erzeugen. Hierzu umfasst die Projektionseinheit 11 eine Vorsatzoptik 13.2 mit einem ersten Vorsatzoptikbereich 26 und einem zweiten Vorsatzoptikbereich 27, wobei durch jeden Vorsatzoptikbereich in Verbindung mit der Projektionslinse 13.1 sowie wenigstens einer Lichtquelle 15 jeweils eine unterschiedliche Lichtverteilung erzeugbar ist. So ist vorliegend durch den ersten Vorsatzoptikbereich 26 in Verbindung mit der Projektionslinse 13.1 und einer ersten Lichtquelle 15.1 eine Basislichtverteilung 24 erzeugbar und durch den zweiten Vorsatzoptikbereich 27 in Verbindung mit der Projektionslinse 13.2 und einer zweiten Lichtquelle 15.2 eine Zusatzlichtverteilung erzeugbar.

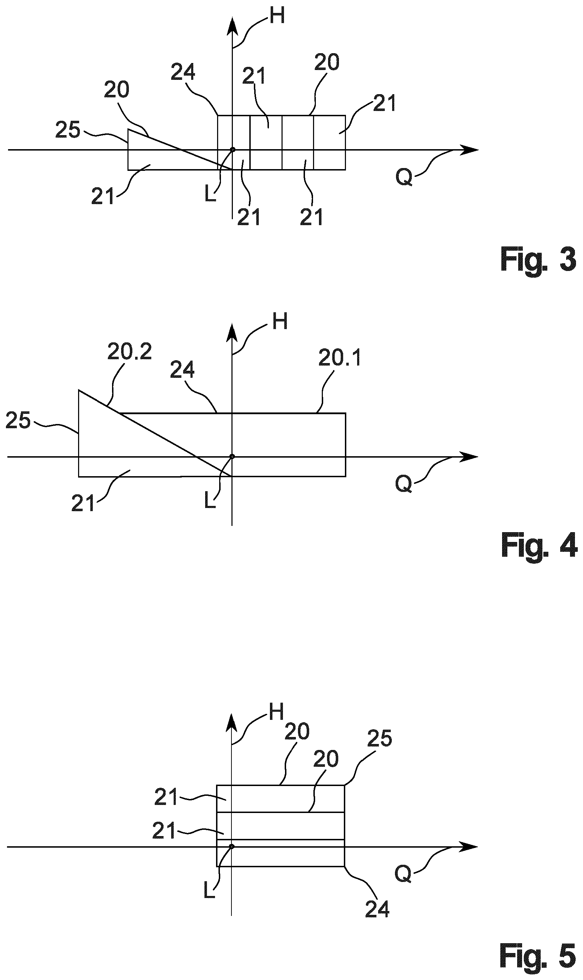

Für eine bessere Übersicht zeigt Fig. 3 eine schematische Abbildung einer Lichtverteilung. Diese Lichtverteilung ist exemplarisch für eine in Fig. 2 gezeigte Projektionseinheit, wobei diese eine Projektionslinse 13.1 mit einer vergleichsweise großen Brennweite umfasst. Entsprechend würde diese Lichtverteilung in vergleichsweise großer Entfernung des Fahrzeugs erzeugt werden. Es wird ersichtlich, dass durch die Projektionseinheit 11 in Verbindung mit Lichtquelleneinheit 14 eine Basislichtverteilung 24 mit einer Hell-Dunkel-Grenze 20 erzeugt wird. Ferner wird durch die Projektionseinheit 11 in Verbindung mit der Lichtquelleneinheit 14 eine Zusatzlichtverteilung 25 mit einer Hell-Dunkel-Grenze erzeugt, wobei die Hell-Dunkel-Grenze 20 der Zusatzlichtverteilung 25 zu der Hell-Dunkel-Grenze 20 der Basislichtverteilung 24 wenigstens einen rotatorischen Versatz aufweist.

Die Hell-Dunkel-Grenze 20 der Basislichtverteilung 24 ist parallel oder im Wesentlichen parallel zu der Fahrzeugquerachse Q orientiert. Die Hell-Dunkel-Grenze 20 der Zusatzlichtverteilung 25 weist eine zur Hell-Dunkel-Grenze 20 der Basislichtverteilung 24 geneigte Orientierung auf. Hierdurch wird eine keilförmige Teillichtverteilung bzw. ein keilförmiges Lichtsegment 21 erzeugt. Hierdurch wird insbesondere bei der Verwendung des Beleuchtungsmoduls 10 in einem Motorrad ermöglicht, dass bei einer Kurvenfahrt des Motorrads und einer damit einhergehenden Neigung des Motorrads das Kurveninnere durch das keilförmige Lichtsegment 21 bzw. durch die Zusatzlichtverteilung 25 ausgeleuchtet wird.

Die unterschiedlichen Lichtsegmente 21 in Fig. 3 werden jeweils durch separate Lichtquellen 15 erzeugt. So können durch eine unabhängige Ansteuerung der betreffenden Lichtquellen einzelne Lichtsegmente 21 in der Lichtverteilung in ihrer Intensität angepasst bzw. gänzlich ausgeblendet werden. So kann bspw. bei einer Geradeausfahrt auf die Generierung des keilförmigen Lichtsegments 21 gänzlich verzichtet werden und bei einer Kurvenfahrt eine Aktivierung des keilförmigen Lichtsegments 21 durch Einschalten der betreffenden Lichtquelle 15 mit dem Ziel einer Ausleuchtung des Kurveninneren vorgenommen werden. In anderen Worten kann wenigstens eine Zusatzlichtverteilung und/oder wenigstens eine Basislichtverteilung eine Mehrzahl von Lichtsegmenten 21 umfassen, wobei jedes Lichtsegment durch wenigstens eine separate Lichtquelle 15 generiert wird.

Fig. 4 zeigt eine weitere schematische Darstellung einer Lichtverteilung, wobei die Charakteristik gegenüber der in Fig. 3 dargestellten Lichtverteilung geändert wurde. Insbesondere wurde der Neigungswinkel zwischen der Hell-Dunkel-Grenze 20 der Basislichtverteilung 24 und der ell-Dunkel-Grenze 20 der Zusatzlichtverteilung 25 erhöht. Eine solche Verteilung ist exemplarisch für Projektionseinheit 11, welche eine Projektionslinse 13.1 mit einer vergleichsweise kleinen Brennweite umfasst. Entsprechend würde diese Lichtverteilung in vergleichsweise kleiner Entfernung des Fahrzeugs 100 erzeugt werden. Auch hier können die Lichtsegmente 21 jeweils durch eine oder mehrere Lichtquellen 15 generiert werden.

Fig. 5 zeigt eine weitere schematische Darstellung einer Lichtverteilung, welche eine Basislichtverteilung 24 und eine Zusatzlichtverteilung 25 umfasst. Dabei sind die Hell-Dunkel-Grenze 20 der Basislichtverteilung 24 und die Hell-Dunkel-Grenze 20 der Zusatzlichtverteilung 25 parallel oder im Wesentlichen parallel orientiert und weisen wenigstens einen translatorischen Versatz auf. Vorliegend weist die Zusatzlichtverteilung 25 im Vergleich zur Basislichtverteilung 24 einen, in Bezug auf die Fahrzeughochachse H, nach oben gerichteten Versatz auf, sodass Veränderungen der Lichtverteilung durch eine Nickbewegung des Fahrzeugs 100 im Zuge einer Verzögerung durch die Zusatzlichtverteilung 25 kompensiert werden.

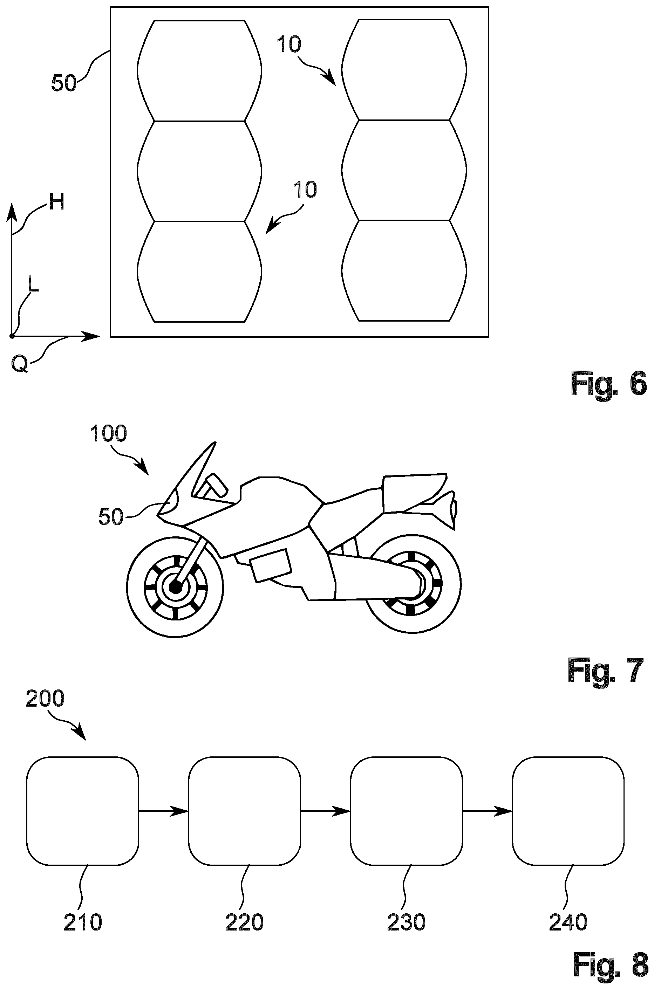

Fig. 6 zeigt eine schematische Darstellung einer Beleuchtungsvorrichtung 50, umfassend zwei Beleuchtungsmodule 10. Die Beleuchtungsmodule 10 sind spiegelsymmetrisch aufgebaut, sodass eine optimierte Ausleuchtung des Sichtfelds eines Fahrers eines Fahrzeugs sowohl in Bezug auf Links- als auch auf Rechtskurven erfolgen kann.

Fig. 7 zeigt eine schematische Ansicht eines Fahrzeugs 100, wobei das Fahrzeug 100 als ein Motorrad ausgebildet ist und wenigstens eine Beleuchtungsvorrichtung 50 umfasst, wobei die Beleuchtungsvorrichtung 50 als ein Frontscheinwerfer des Fahrzeugs 100 ausgebildet ist.

Fig. 8 zeigt eine schematische Ansicht eines Verfahrens 200 zur Steuerung eines Beleuchtungsmoduls 10, umfassend wenigstens einen der folgenden Schritte:
- Einschalten und/oder Ausschalten und/oder Regulieren 210 der Helligkeit wenigstens einer Lichtquelle 15 des Lichtquellenmoduls 12 in Abhängigkeit einer, insbesondere zeitaktuellen, Verzögerung des Fahrzeugs 100,
- Einschalten und/oder Ausschalten und/oder Regulieren 220 der Helligkeit wenigstens einer Lichtquelle 15 des Lichtquellenmoduls 12 in Abhängigkeit einer, insbesondere zeitaktuellen, Neigung des Fahrzeugs 100,
- Einschalten und/oder Ausschalten und/oder Regulieren 230 der Helligkeit wenigstens einer Lichtquelle 15 des Lichtquellenmoduls 12 in Abhängigkeit einer, insbesondere zeitaktuellen, Fahrzeuggeschwindigkeit,
- Einschalten und/oder Ausschalten und/oder Regulieren 240 der Helligkeit wenigstens einer Lichtquelle 15 des Lichtquellenmoduls in Abhängigkeit wenigstens eines entgegenkommenden Fahrzeugs 100.

### Bezugszeichenliste

- 10: Beleuchtungsmodul
- 11: Projektionsmodul
- 12: Lichtquellenmodul
- 13: Projektionseinheit
- 13.1: Projektionslinse
- 13.2: Vorsatzoptik
- 14: Lichtquelleneinheit
- 15: Lichtquelle
- 15.1: Erste Lichtquelle
- 15.2: Zweite Lichtquelle
- 17: Steuereinheit
- 18: Kühlkörper
- 19: Leiterplatte
- 20: Hell-Dunkel-Grenze
- 21: Lichtsegment
- 22: Lichteintrittsseite
- 23: Lichtaustrittsseite
- 24: Basislichtverteilung
- 25: Zusatzlichtverteilung
- 26: Erster Vorsatzoptikbereich
- 27: Zweiter Vorsatzoptikbereich
- 50: Beleuchtungsvorrichtung
- 100: Fahrzeug
- 200: Verfahren
- 210: Einschalten/Ausschalten/Regulieren
- 220: Einschalten/Ausschalten/Regulieren
- 230: Einschalten/Ausschalten/Regulieren
- 240: Einschalten/Ausschalten/Regulieren
- H: Fahrzeughochachse
- Q: Fahrzeugquerachse
- L: Fahrzeuglängsachse

## Patentansprüche

1. Beleuchtungsmodul (10) zur Verwendung in einer
Beleuchtungsvorrichtung (50) eines Fahrzeugs (100), insbesondere eines Motorrads, umfassend wenigstens ein Projektionsmodul (11) zur Erzeugung einer Lichtverteilung in einer Umgebung des Fahrzeugs (100) sowie wenigstens ein Lichtquellenmodul (12), wobei das Projektionsmodul (11) eine Mehrzahl von Projektionseinheiten (13) umfasst und wobei das Lichtquellenmodul (12) eine Mehrzahl von Lichtquelleneinheiten (14) umfasst, wobei jede Projektionseinheit (13) wenigstens eine Projektionslinse (13.1) umfasst und wobei jeder Projektionseinheit (13) wenigstens eine Lichtquelleneinheit (14) zugeordnet ist und wobei wenigstens zwei Projektionslinsen (13.1) von wenigstens zwei unterschiedlichen Projektionseinheiten (13) eine unterschiedliche Brennweite aufweisen,
**dadurch gekennzeichnet,**
**dass** wenigstens eine Projektionseinheit (13) wenigstens eine Vorsatzoptik (13.2) umfasst, wobei die Vorsatzoptik (13.2) wenigstens eine Linse umfasst, wobei die Vorsatzoptik (13.2) und wenigstens eine Projektionslinse (13.1) der Projektionseinheit (13) derart zueinander positioniert sind, dass das von der Projektionseinheit (13) zugeordneten Lichtquelleneinheit (14) emittierte Licht zunächst in die Vorsatzoptik (13.2) und aus der Vorsatzoptik (13.2) in die wenigstens eine Projektionslinse (13.1) eingestrahlt wird, und ein Brennpunkt der Projektionslinse (13) innerhalb der Vorsatzoptik (13.2) liegt.

2. Beleuchtungsmodul (10) nach einem der vorhergehenden Ansprüche,
**dadurch gekennzeichnet,**
**dass** die Projektionseinheiten (13) übereinander angeordnet sind, wobei insbesondere diejenige Projektionseinheit (13), welche die Projektionslinse (13.1) mit der größten Brennweite umfasst, die oberste Projektionseinheit (13) ausbildet
und/oder
diejenige Projektionseinheit (13), welche die Projektionslinse (13.1) mit der kleinsten Brennweite umfasst, die unterste Projektionseinheit (13) ausbildet.

3. Beleuchtungsmodul (10) nach einem der vorhergehenden Ansprüche, **dadurch gekennzeichnet,**
**dass** wenigstens eine Projektionseinheit (13) dazu ausgebildet ist wenigstens eine Basislichtverteilung (24) mit einer Hell-Dunkel-Grenze (20) und wenigstens eine Zusatzlichtverteilung (25) mit einer Hell-Dunkel-Grenze (20) zu erzeugen, wobei die Hell-Dunkel-Grenze (20) der Zusatzlichtverteilung (25) einen rotatorischen Versatz zu der Hell-Dunkel-Grenze (20) der Basislichtverteilung (20) aufweist.

4. Beleuchtungsmodul (10) nach einem der vorhergehenden Ansprüche, **dadurch gekennzeichnet,**
**dass** wenigstens eine Projektionseinheit (13) dazu ausgebildet ist wenigstens eine Basislichtverteilung (24) mit einer Hell-Dunkel-Grenze (20) und wenigstens eine Zusatzlichtverteilung (25) mit einer Hell-Dunkel-Grenze (20) zu erzeugen, wobei die Hell-Dunkel-Grenze (20) der Zusatzlichtverteilung (25) einen translatorischen Versatz zu der Hell-Dunkel-Grenze (20) der Basislichtverteilung (24) aufweist.

5. Beleuchtungsmodul (10) nach einem der vorhergehenden Ansprüche, **dadurch gekennzeichnet,**
**dass** die Brennweite der Projektionslinse (13.1) mit der größten Brennweite wenigstens das Doppelte der Brennweite der Projektionslinse (13.1) mit der kleinsten Brennweite beträgt.

6. Beleuchtungsmodul (10) nach einem der vorhergehenden Ansprüche, **dadurch gekennzeichnet,**
**dass** alle Lichtquelleneinheiten (14) in einer gemeinsamen Ebene angeordnet sind.

7. Beleuchtungsmodul (10) nach einem der vorhergehenden Ansprüche, **dadurch gekennzeichnet,**
**dass** wenigstens eine Projektionslinse (13.1) an einer Lichteintrittsseite (22) eine planare Oberfläche aufweist und/oder dass wenigstens eine Projektionslinse (13) an einer Lichtaustrittsseite (23) eine konkave Oberfläche aufweist.

8. Beleuchtungsvorrichtung (50), insbesondere Fronscheinwerfer, für ein Fahrzeug (100) umfassend wenigstens ein Beleuchtungsmodul (10) nach einem der vorhergehenden Ansprüche.

9. Fahrzeug (100), umfassend wenigstens eine Beleuchtungsvorrichtung (50) nach dem vorhergehenden Anspruch.

10. Verfahren (200) zur Steuerung eines Beleuchtungsmoduls (10) nach einem der Ansprüche 1 - 7, umfassend wenigstens einen der folgenden Schritte:
- Einschalten und/oder Ausschalten und/oder Regulieren (210) der Helligkeit wenigstens einer Lichtquelle (15) des Lichtquellenmoduls (12) in Abhängigkeit einer, insbesondere zeitaktuellen, Verzögerung des Fahrzeugs (100),
- Einschalten und/oder Ausschalten und/oder Regulieren (220) der Helligkeit wenigstens einer Lichtquelle (15) des Lichtquellenmoduls (12) in Abhängigkeit einer, insbesondere zeitaktuellen, Neigung des Fahrzeugs (100),
- Einschalten und/oder Ausschalten und/oder Regulieren (230) der Helligkeit wenigstens einer Lichtquelle (15) des Lichtquellenmoduls (12) in Abhängigkeit einer, insbesondere zeitaktuellen, Fahrzeuggeschwindigkeit,
- Einschalten und/oder Ausschalten und/oder Regulieren (240) der Helligkeit wenigstens einer Lichtquelle (15) des Lichtquellenmoduls in Abhängigkeit wenigstens eines entgegenkommenden Fahrzeugs (100).

11. Computerprogrammprodukt, umfassend Befehle, die bewirken, dass ein Beleuchtungsmodul (10), insbesondere eine Steuereinheit (17) des Beleuchtungsmoduls (10), nach einem der Ansprüche 1 - 7, Verfahrensschritte gemäß einem Verfahren (200) nach Anspruch 10 ausführt.

12. Computerlesbares Speichermedium, auf dem ein Computerprogrammprodukt nach dem voranstehenden Anspruch gespeichert ist.

13. Datenträgersignal, das ein Computerprogrammprodukt nach Anspruch 11 überträgt.

## Claims

1. A lighting module (10) for use in a lighting device (50) of a vehicle (100), in particular a motorcycle, comprising at least one projection module (11) for generating a light distribution in an area around the vehicle (100) and at least one light source module (12), said projection module (11) comprising a plurality of projection units (13) and said light source module (12) comprising a plurality of light source units (14), with each projection unit (13) comprising at least one projection lens (13.1) and with at least one light source unit (14) being assigned to each projection unit (13) and with at least two projection lenses (13.1) of at least two different projection units (13) having different focal lengths,
**characterised in that**
at least one projection unit (13) comprises at least one attachment lens (13.2), with said attachment lens (13.2) comprising at least one lens, whereby the attachment lens (13.2) and at least one projection lens (13.1) of the projection unit (13) are positioned relative to one another in such a way that the light emitted by the light source unit (14) assigned to the projection unit (13) is first directed into the attachment lens (13.2) and from the attachment lens (13.2) into the at least one projection lens (13.1), and a focal point of the projection lens (13.1) lies within the attachment lens (13.2).

2. A lighting module (10) according to one of the preceding claims,
**characterised in that**
the projection units (13) are arranged above one other with in particular the projection unit (13) comprising the projection lens (13.1) with the largest focal length forms the uppermost projection unit (13),
and/or
the projection unit (13) comprising the projection lens (13.1) with the shortest focal length forms the lowest projection unit (13).

3. A lighting module (10) according to one of the preceding claims,
**characterised in that**
at least one projection unit (13) is designed to generate at least one basic light distribution (24) with a light/dark cut-off line (20) and at least one additional light distribution (25) with a light/dark cut-off line (20), whereby the light/dark cut-off line (20) of the additional light distribution (25) is rotationally offset from the light/dark cut-off line (20) of the basic light distribution (24).

4. A lighting module (10) according to one of the preceding claims,
**characterised in that**
at least one projection unit (13) is designed to generate at least one basic light distribution (24) with a light/dark cut-off line (20) and at least one additional light distribution (25) with a light/dark cut-off line (20), whereby the light/dark cut-off line (20) of the additional light distribution (25) has a translational offset from the light/dark cut-off line (20) of the basic light distribution (24).

5. A lighting module (10) according to one of the preceding claims,
**characterised in that**
the focal length of the projection lens (13.1) with the largest focal length is at least twice the focal length of the projection lens (13.1) with the shortest focal length.

6. A lighting module (10) according to one of the preceding claims,
**characterised in that**
all light source units (14) are arranged in a common plane.

7. A lighting module (10) according to one of the preceding claims,
**characterised in that**
at least one projection lens (13.1) has a planar surface on a light inlet side (22) and/or that at least one projection lens (13.1) has a concave surface on a light outlet side (23).

8. A lighting device (50), in particular a front headlamp, for a vehicle (100) comprising at least one lighting module (10) according to one of the preceding claims.

9. A vehicle (100) comprising at least one lighting device (50) according to the preceding claim.

10. A method (200) for controlling a lighting module (10) according to one of Claims 1 - 7 comprising at least one of the following steps:
- Switching on and/or switching off and/or regulating (210) the brightness of at least one light source (15) of the light source module (12) depending on an, in particular real-time, deceleration of the vehicle (100),
- Switching on and/or switching off and/or regulating (220) the brightness of at least one light source (15) of the light source module (12) depending on an, in particular real-time, tilting of the vehicle (100),
- Switching on and/or switching off and/or regulating (230) the brightness of at least one light source (15) of the light source module (12) depending on an, in particular real-time, vehicle speed,
- Switching on and/or switching off and/or regulating (240) the brightness of at least one light source (15) of the light source module depending on at least one oncoming vehicle (100).

11. A computer program product comprising instructions which cause a lighting module (10), in particular a control unit (17) of the lighting module (10) according to one of Claims 1 - 7 to execute steps of a method (200) according to Claim 10.

12. A computer-readable storage medium on which a computer program product according to the preceding claim is stored.

13. A data carrier signal that transmits a computer program product according to Claim 11.

## Revendications

1. Module d'éclairage (10) destiné à être utilisé dans un dispositif d'éclairage (50) d'un véhicule (100), en particulier d'une moto, comprenant au moins un module de projection (11) pour générer une répartition de lumière dans l'environnement du véhicule (100), ainsi qu'au moins un module de source de lumière (12), le module de projection (11) comprenant plusieurs unités de projection (13) et le module de source de lumière (12) comprenant plusieurs unités de source de lumière (14), chaque unité de projection (13) comprenant au moins une lentille de projection (13.1) et au moins une unité de source de lumière (14) étant associée à chaque unité de projection (13), deux lentilles de projection (13.1) au moins d'au moins deux unités de projection (13) différentes présentant une distance focale différente,
**caractérisé en ce que**
au moins une unité de projection (13) comprend au moins un module optique (13.2), ledit module optique (13.2) comprenant au moins une lentille, ledit module optique (13.2) et au moins une lentille de projection (13.1) de l'unité de projection (13) étant positionnés l'un par rapport à l'autre de telle sorte que la lumière émise par l'unité de source de lumière (14) associée à l'unité de projection (13) soit d'abord dirigée dans le module optique (13.2) et, depuis le module optique (13.2) vers une lentille de projection (13.1) au moins, et **en ce que** un foyer de la lentille de projection (13.1) se trouve à l'intérieur du module optique (13.2).

2. Module d'éclairage (10) selon l'une des revendications précédentes,
**caractérisé en ce que**
les unités de projection (13) sont disposées les unes au-dessus des autres, l'unité de projection (13) qui comprend la lentille de projection (13.1) ayant la plus grande distance focale constituant notamment l'unité de projection supérieure (13) et/ou **en ce que**
l'unité de projection (13) qui comprend la lentille de projection (13.1) ayant la plus petite distance focale constitue l'unité de projection inférieure (13).

3. Module d'éclairage (10) selon l'une des revendications précédentes,
**caractérisé en ce que**
au moins une unité de projection (13) est conçue pour générer au moins une répartition de base de la lumière (24) avec une limite entre la zone claire et la zone sombre (20) et au moins une répartition supplémentaire de la lumière (25) comportant une limite entre la zone claire et la zone sombre (20), la limite entre la zone claire et la zone sombre (20) de la répartition supplémentaire de la lumière (25) présentant un décalage angulaire par rapport à la limite entre la zone claire et la zone sombre (20) de la répartition de base de la lumière (24).

4. Module d'éclairage (10) selon l'une des revendications précédentes,
**caractérisé en ce que**
au moins une unité de projection (13) est conçue pour générer au moins une répartition de base de la lumière (24) avec une limite entre la zone claire et la zone sombre (20) et au moins une répartition supplémentaire de la lumière (25) comportant une limite entre la zone claire et la zone sombre (20), la limite entre la zone claire et la zone sombre (20) de la répartition supplémentaire de la lumière (25) présentant un décalage en translation par rapport à la limite entre la zone claire et la zone sombre (20) de la répartition de base de la lumière (24).

5. Module d'éclairage (10) selon l'une des revendications précédentes,
**caractérisé en ce que**
la distance focale de la lentille de projection (13.1) ayant la plus grande distance focale correspond au moins au double de celle de la lentille de projection (13.1) ayant la plus petite distance focale.

6. Module d'éclairage (10) selon l'une des revendications précédentes,
**caractérisé en ce que**
toutes les unités de source de lumière (14) sont disposées dans un même plan.

7. Module d'éclairage (10) selon l'une des revendications précédentes,
**caractérisé en ce que**
au moins une lentille de projection (13.1) présente une surface plane au niveau d'un côté d'entrée de lumière (22) et/ou au moins une lentille de projection (13.1) présente une surface concave au niveau d'un côté de sortie de lumière (23).

8. Dispositif d'éclairage (50), en particulier phare avant, pour un véhicule (100) comprenant au moins un module d'éclairage (10) selon l'une des revendications précédentes.

9. Véhicule (100) comprenant au moins un dispositif d'éclairage (50) selon la revendication précédente.

10. Procédé (200) de commande d'un module d'éclairage (10) selon l'une des revendications 1 à 7, comprenant au moins l'une des étapes suivantes :
- Allumer et/ou éteindre et/ou réguler (210) la luminosité d'au moins une source de lumière (15) du module de source de lumière (12) en fonction d'un ralentissement, notamment instantané, du véhicule (100),
- Allumer et/ou éteindre et/ou réguler (220) la luminosité d'au moins une source de lumière (15) du module de source de lumière (12) en fonction d'une inclinaison, notamment instantanée, du véhicule (100),
- Allumer et/ou éteindre et/ou réguler (230) la luminosité d'au moins une source de lumière (15) du module de source de lumière (12) en fonction d'une vitesse, notamment instantanée, du véhicule
- Allumer et/ou éteindre et/ou réguler (240) la luminosité d'au moins une source de lumière (15) du module de source de lumière en fonction d'au moins un véhicule circulant en sens inverse (100).

11. Produit programme informatique comprenant des instructions pour faire en sorte qu'un module d'éclairage (10), en particulier une unité de commande (17) du module d'éclairage (10), selon l'une des revendications 1 à 7,
exécute des étapes du procédé (200) selon la revendication 10.

12. Support lisible par ordinateur sur lequel est stocké un produit programme informatique selon la revendication précédente.

13. Signal de support de données transmettant un produit programme informatique selon la revendication 11.
